# EUROPEAN PATENT APPLICATION

(11) **EP 4 738 119 A1**
(43) Date of publication of application: **06.05.2026**
(21) Application number: 24867196.8
(22) Date of filing: 16.08.2024
(51) Int. Cl.: G06F 9/50

(54) **FREQUENCY MODULATION METHOD AND ELECTRONIC DEVICE**

(30) Priority: 22.09.2023 CN 202311240144
(71) Applicant: Honor Device Co., Ltd., Shenzhen, Guangdong 518040 (CN)
(72) Inventor: YANG, Zudi, Shenzhen, Guangdong 518040 (CN); HUANG, Tonghuan, Shenzhen, Guangdong 518040 (CN); GUO, Daoxin, Shenzhen, Guangdong 518040 (CN)
(74) Representative: Isarpatent
(86) International application number: PCT/CN2024/112865
(87) International publication number: WO 2025/060779

(57) **Abstract**

A frequency scaling method and an electronic device relate to the field of terminal technologies, and may adjust a frequency of a GPU based on a processing progress of the GPU for a current frame of image, so as to ensure that a frame loss does not occur. The method includes: An electronic device displays a first image. Within a first time range for displaying the first image, the electronic device detects whether first end time at which a GPU completes processing on a second image exceeds first time, where the second image and the first image are two consecutive frames of images, and the first time is within the first time range. The electronic device increases a frequency of the GPU if the first end time exceeds the first time. The electronic device displays the second image after the GPU completes the processing on the second image.

## Description

This application claims priority to Chinese Patent Application No. 202311240144.X, filed with the China National Intellectual Property Administration on September 22, 2023 and entitled "FREQUENCY SCALING METHOD AND ELECTRONIC DEVICE", which is incorporated herein by reference in its entirety.

### TECHNICAL FIELD

Embodiments of this application relate to the field of terminal technologies, and in particular, to a frequency scaling method and an electronic device.

### BACKGROUND

In an electronic device such as a mobile phone or a tablet, a graphics processing unit (Graphics Processing Unit, GPU) is an important component for completing image processing. Image processing may include image rendering and image composition. Generally, if a frequency of the GPU is higher, stronger computing power is provided, and efficiency of image processing is higher. If a frequency of the GPU is higher, the GPU provides weaker computing power, and correspondingly, efficiency of image processing is lower. Therefore, the electronic device may adjust the frequency of the GPU to meet an efficiency requirement of image processing.

In the conventional technology, the electronic device may select an appropriate frequency based on usage (GPU_busy) of the GPU. For example, if the usage is continuously above 90% for specific duration, it indicates that when the GPU runs at a current frequency, there is little idle time. Therefore, the electronic device may increase the frequency of the GPU, so that the GPU can have more idle time to meet a requirement for more efficient processing.

However, in the foregoing conventional technology, the electronic device increases the frequency of the GPU only after the usage is continuously above 90% for specific duration. The frequency increase is hysteretic, a real-time image processing requirement is not met, and a frame loss may be caused.

### SUMMARY

This application provides a frequency scaling method and an electronic device, to adjust a frequency of a GPU based on a processing progress of the GPU for a current frame of image, so as to ensure that a frame loss does not occur.

To achieve the foregoing objective, the following technical solutions are used in this application.

According to a first aspect, this application provides a frequency scaling method, applied to an electronic device. The electronic device includes a graphics processing unit GPU. The electronic device displays a first image. Within a first time range for displaying the first image, the electronic device detects whether first end time at which a GPU completes processing on a second image exceeds first time, where the second image and the first image are two consecutive frames of images, and the first time is within the first time range. The electronic device increases a frequency of the GPU if the first end time exceeds the first time. The electronic device displays the second image after the GPU completes the processing on the second image.

In other words, when the electronic device displays the first image (that is, a former frame of image in the two consecutive frames of images), the electronic device may process the second image (that is, a latter frame of image in the two consecutive frames of images). In addition, if the GPU does not complete image processing (for example, image rendering and composition) before the first time in a processing process, it indicates that the GPU cannot complete image processing on the second image in a timely manner, and the electronic device may increase the frequency of the GPU, to avoid a frame loss.

In this way, the electronic device may increase the frequency of the GPU based on a case that the GPU cannot complete image processing in a timely manner in a processing process of the second image. In one aspect, the electronic device enables the GPU to obtain the second image through processing in a timely manner, to ensure that a frame loss does not occur. In another aspect, the electronic device does not increase the frequency of the GPU in a case that the GPU can complete image processing in a timely manner, so that a resource waste is not caused.

In a possible design manner of the first aspect, the electronic device further includes a display driver and a hardware composer HWC. The first time is after second time at which the display driver starts waiting for the GPU to complete the processing on the second image, and after receiving a composition result of the HWC for the second image, the display driver starts waiting for the GPU to complete the processing on the second image.

When the display driver starts waiting for the GPU to complete image processing, it indicates that a CPU basically completes related processing of sending an image for display. Then, whether a frame loss occurs mainly depends on operating efficiency of the GPU. Therefore, preset time T0 is configured to be time after the display driver starts waiting for the GPU to complete image processing, and under the impact of only the operating frequency of the GPU, the frequency of the GPU may be adjusted, to accurately control that a frame loss does not occur.

In a possible design manner of the first aspect, that the electronic device detects whether first end time at which the GPU completes processing on a second image exceeds first time includes: The electronic device detects, at the first time, whether the display driver is waiting for the GPU to complete the processing on the second image. If the display driver is waiting for the GPU to complete the processing on the second image, the first end time exceeds the first time. If the display driver is not waiting for the GPU to complete the processing on the second image, the first end time does not exceed the first time.

In this way, the electronic device may accurately determine, based on whether the display driver is waiting for the GPU to complete the processing on the second image, whether the GPU has completed image processing on the second image.

In a possible design manner of the first aspect, the second time includes time at which the display driver starts executing a waiting function. The waiting function is used by the display driver to wait for the GPU to complete the processing on the second image, and after the GPU completes the processing on the second image, the display driver ends executing the waiting function.

In a possible design manner of the first aspect, that the electronic device increases a frequency of the GPU includes: The electronic device increases a minimum frequency of the GPU. It may be understood that, after the electronic device increases the minimum frequency of the GPU, an actual operating frequency of the GPU changes to an increased minimum frequency, so that the actual operating frequency can be greater than or equal to the minimum frequency, and then the GPU may operate at a frequency level corresponding to the increased minimum frequency.

Correspondingly, the method further includes: Within the first time range for displaying the first image, the electronic device detects whether the first end time exceeds third time, and the electronic device decreases the frequency of the GPU if the first end time does not exceed the third time. The third time is within the first time range, and the third time is before the first time.

If the first end time does not exceed the third time, it indicates that the GPU may complete image processing on the second image in advance. The electronic device may decrease the frequency of the GPU, to avoid a waste of resources.

In a possible design manner of the first aspect, that the electronic device detects whether first end time at which the GPU completes processing on a second image exceeds first time includes: If the first end time exceeds the third time, the electronic device detects whether the first end time at which the GPU completes the processing on the second image exceeds the first time.

Because the third time is after the first time, if the first end time does not exceed the third time, the first end time does not exceed the first time, and the frequency of the GPU does not need to be increased. In this case, after detecting that the first end time exceeds the third time, the electronic device does not need to further detect whether the first end time exceeds the first time. Therefore, only after detecting that the first time exceeds the third time, the electronic device further detects whether the first end time exceeds the first time, thereby avoiding ineffective detection and saving computing resources.

In a possible design manner of the first aspect, that the electronic device detects whether first end time at which the GPU completes processing on a second image exceeds first time includes: If a time interval between the first time and fourth time is greater than a duration threshold, the electronic device detects whether the first end time exceeds the first time. That the electronic device detects whether the first end time exceeds third time includes: If the time interval between the third time and the fourth time is greater than the duration threshold, the electronic device detects whether the first end time exceeds the third time. The fourth time is time at which the electronic device decreases the frequency of the GPU last time before the first image is displayed.

In this way, the electronic device can avoid detecting and adjusting the frequency of the GPU without effectiveness.

In a possible design manner of the first aspect, if the first end time exceeds the third time but does not exceed the first time, it indicates that the GPU operating at a current frequency can ensure that image processing is completed in a timely manner, and a resource waste is not caused, that is, the current frequency is appropriate. Therefore, the electronic device may not adjust the frequency of the GPU. In this way, it can be ensured that the GPU operates at an appropriate frequency.

In a possible design manner of the first aspect, the method further includes: If first end time corresponding to at least a first quantity of consecutive images exceeds the third time but does not exceed the first time, it indicates that the current frequency can maintain image processing efficiency of the GPU always in a proper range, and the electronic device may adjust the frequency of the GPU through dynamic clock and voltage scaling DCVS. In other words, when operating efficiency of the GPU meets a requirement, the electronic device may further adjust the frequency of the GPU based on usage of the GPU, to further ensure that the frequency of the GPU matches the usage.

In a possible design manner of the first aspect, that the electronic device increases a frequency of the GPU includes: The electronic device increases an actual operating frequency of the GPU. It may be understood that, after the electronic device increases the actual operating frequency of the GPU, because the minimum frequency of the GPU does not change, after the actual operating frequency of the GPU is increased, the electronic device may control the frequency of the GPU through DCVS. That is, an actual value of the frequency of the GPU may not be kept stable after an increase. Specifically, after the electronic device increases the frequency of the GPU, the method further includes: The electronic device adjusts the frequency of the GPU through dynamic clock and voltage scaling DCVS.

In a possible design manner of the first aspect, the method further includes: If the frequency of the GPU is continuously increased more than a preset quantity of times, the electronic device decreases the frequency of the GPU to a first value through the DCVS, and the electronic device increases a minimum frequency of the GPU to a second value, where a frequency level to which the second value belongs is one level higher than a frequency level to which the first value belongs, so that the GPU can operate at a frequency at which the first end time of completing image processing is earlier than the first time.

In a possible design manner of the first aspect, the electronic device further includes a display. That the electronic device displays the first image includes: At fifth time after the GPU completes the processing on the first image, the display driver drives the display to display the first image. Correspondingly, the method further includes: The electronic device obtains the fifth time and the second time. The electronic device adds a refresh cycle of the display to the fifth time to obtain sixth time. The electronic device determines a time point between the second time and the sixth time as the first time point, where a proportion of a time interval between the time point and the second time in a time interval between the second time and the sixth time is a first proportion.

According to a second aspect, this application further provides an electronic device. The electronic device includes a display, a memory, and one or more processors. The display, the memory, and a processor are coupled to each other. The display includes a first screen and a second screen. When the display is in a folded state, display directions of the first screen and the second screen are opposite, and the first screen and the second screen are two different display areas of the display. The memory is configured to store computer program code, and the computer program code includes computer instructions. When the computer instructions are executed by the processor, the electronic device is enabled to perform the method in the first aspect and the possible design manners of the first aspect.

According to a third aspect, this application provides a chip system. The chip system is applied to an electronic device including a display and a memory. The chip system includes one or more interface circuits and one or more processors. An interface circuit is interconnected to a processor by using a line. The interface circuit is configured to receive a signal from the memory of the electronic device, and send the signal to the processor. The signal includes computer instructions stored in the memory. When the processor executes the computer instructions, the electronic device performs the method according to any one of the first aspect and the possible design manners of the first aspect.

According to a fourth aspect, this application provides a computer storage medium. The computer storage medium includes computer instructions, and when the computer instructions are run on an electronic device, the electronic device is enabled to perform the method according to any one of the first aspect and the possible design manners of the first aspect.

According to a fifth aspect, this application provides a computer program product. When the computer program product runs on a computer, the computer is enabled to perform the method according to any one of the first aspect and the possible design manners of the first aspect.

It may be understood that for beneficial effects that can be achieved by the electronic devices according to the second aspect, the chip system according to the third aspect, the computer storage medium according to the fourth aspect, and the computer program product according to the fifth aspect, refer to the beneficial effects in any one of the first aspect and the possible design manners of the first aspect. Details are not described herein again.

### BRIEF DESCRIPTION OF DRAWINGS

FIG. 1 is a diagram of a software and hardware architecture of a mobile phone;
FIG. 2 is a schematic diagram of an image processing process;
FIG. 3 is a schematic diagram 1 of a problem of frequency scaling using DCVS;
FIG. 4 is a schematic diagram 2 of a problem of frequency scaling using DCVS;
FIG. 5 is a schematic diagram 3 of a problem of frequency scaling using DCVS;
FIG. 6 is a schematic diagram of preset time T0 according to an embodiment of this application;
FIG. 7 is a schematic diagram of a principle of determining a next refresh moment T2 according to an embodiment of this application;
FIG. 8 is a diagram of a correspondence between a frequency level and a frequency value according to an embodiment of this application;
FIG. 9 is a schematic diagram of preset time T3 according to an embodiment of this application;
FIG. 10 is an example diagram 1 of frequency scaling according to an embodiment of this application;
FIG. 11 is an example diagram 2 of frequency scaling according to an embodiment of this application;
FIG. 12 is an example diagram 3 of frequency scaling according to an embodiment of this application;
FIG. 13 is an example diagram 4 of frequency scaling according to an embodiment of this application; and
FIG. 14 is an example diagram 5 of frequency scaling according to an embodiment of this application.

### DESCRIPTION OF EMBODIMENTS

The following describes technical solutions in embodiments of this application with reference to the accompanying drawings in embodiments of this application. In the descriptions of embodiments of this application, the terms used in the following embodiments are merely intended to describe specific embodiments, but are not intended to limit this application. As used in the specification and the appended claims of this application, singular expressions "a", "the", "the foregoing", and "this" also aim to include expressions such as "one or more", unless the context explicitly indicates the opposite. It should be further understood that, in the following embodiments of this application, "at least one" and "one or more" mean one or more (including two). The term "and/or" describes an association relationship of associated objects, and indicates that three relationships may exist. For example, A and/or B may indicate the following three cases: Only A exists, both A and B exist, and only B exists. A and B may be singular or plural. The character "/" usually indicates an "or" relationship between the associated objects.

Reference to "an embodiment", "some embodiments", or the like described in this specification means that specific features, structures, or characteristics described with reference to the embodiment are included in one or more embodiments of this application. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and variations thereof all mean "including but not limited to", unless otherwise specifically emphasized in another manner. The term "connection" includes direct connection and indirect connection, unless otherwise specified. "First" and "second" are merely intended for a purpose of description, and shall not be understood as an indication or implication of relative importance or implicit indication of a quantity of indicated technical features.

In embodiments of this application, words such as "example" or "for example" are used to represent giving examples, illustrations, or descriptions. Any embodiment or design solution described as "example" or "for example" in embodiments of this application should not be construed as being more preferred or advantageous than other embodiments or design solutions. Specifically, the words such as "example" or "for example" are used to present related concepts in a specific manner.

A frequency scaling method provided in embodiments of this application may be applied to a scenario in which a GPU needs to process an image in an electronic device, especially a scenario in which the GPU needs to continuously process a plurality of frames of images. For example, in a process of displaying a desktop animation, the GPU needs to continuously perform processing to obtain a plurality of animation frames. In a game playing scenario, the GPU needs to continuously process a plurality of frames of game pictures.

In the foregoing scenarios, according to the frequency scaling method provided in embodiments of this application, the electronic device can adjust and control a frequency of the GPU, to meet an operating efficiency requirement and ensure that no frame is lost.

For example, the electronic device in embodiments of this application may be a device that supports a display function, such as a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), or an augmented reality (augmented reality, AR)/virtual reality (virtual reality, VR) device. A specific form of the electronic device is not specially limited in embodiments of this application. The following mainly uses an example in which the electronic device is a mobile phone to describe the solutions of this application.

In embodiments of this application, a software system of the mobile phone may use a layered architecture, an event-driven architecture, a microkernel architecture, a microservice architecture, or a cloud architecture. In the following embodiments, an Android system with a layered architecture is mainly used as an example to illustrate a software and hardware architecture of a mobile phone 100.

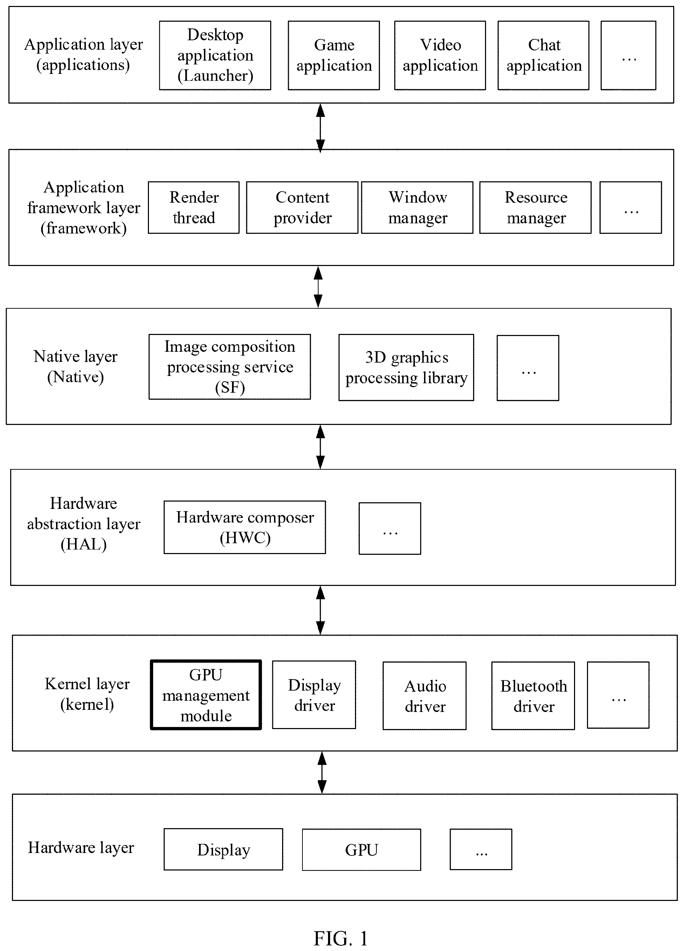

In the layered architecture, software is divided into several layers, and each layer has a clear role and task. The layers communicate with each other through a software interface. In some embodiments, referring to FIG. 1, the software and hardware architecture of the mobile phone includes an application layer (applications), an application framework layer (framework), a native layer (Native), a hardware abstraction layer (HAL), a kernel layer (kernel), and a hardware layer from top to bottom.

Applications such as Phone, Memo, Browser, Contacts, Camera, Gallery, Calendar, Desktop, Game, Video, and Chat may be installed at the application layer. Only some applications are shown in the figure. All these applications need to display images on a display of the mobile phone. For example, an application icon on a desktop, a game picture, a video frame, and the like need to be displayed on the display of the mobile phone. These images need to be obtained by a GPU through processing (for example, rendering and composition), that is, belong to a scenario in which the GPU needs to process the images.

The application framework layer provides an application programming interface (application programming interface, API) and a programming framework for the application layer. For example, the application framework layer may include a window manager, a content provider, a view system, a phone manager, a resource manager, a notification manager, and the like, which are only partially shown in the figure.

Further, the application framework layer further includes a render thread (RenderThread). The RenderThread may receive invocation from an upper-layer application and complete image drawing, and then send a drawing result to a bottom layer (for example, the native layer) for further processing.

The native layer provides various services for an upper layer (for example, the application framework layer). For example, the native layer includes an image composition processing service (SurfaceFlinger, SF), a three-dimensional (3D) graphics processing library (for example, OpenGL ES), a two-dimensional (2D) graphics engine (for example, SGL), and the like, which are only partially shown in the figure.

The SF may be used for refresh rate control. It may be understood that, when an application at the application framework layer needs to display a new frame of image, a vertical synchronization (Vertical Synchronization, vSync) signal may be requested through the SF. The vSync signal may trigger the application to complete rendering of the new frame of image, then perform composition, and finally send the image for display. In addition, after one refresh is completed, a display of the electronic device may distribute, through the SF, the vSync signal to the application that requests the vSync signal, that is, to the application that has a rendering requirement. That is, the SF may distribute the vSync signal from the display to the application, to control the application to start rendering after the display is refreshed once. That is, refresh rate control is implemented.

In addition, the SF may be further configured to control content obtained through rendering, for example, perform layer splicing.

The hardware abstraction layer performs one-layer packaging on a bottom-layer hardware driver, and provides an upper layer with a universal interface for invoking the driver, so that the upper layer invokes the driver to drive corresponding hardware to work. The hardware abstraction layer includes a hardware composer (Hwcomposer, HWC). The HWC may perform image composition on content obtained by the SF through processing.

It may be understood that the SF may invoke an interface of the graphics library to complete image composition by using the GPU. It is clear that completing image composition by using the GPU needs to consume GPU resources. Therefore, image composition may be performed by using the HWC, to reduce pressure of the GPU.

The kernel layer includes a driver that drives hardware to work, such as a display driver (Display drivers), an audio driver, and a Bluetooth driver, which are only partially shown in the figure. The display driver is configured to drive the display to display an image.

Further, the kernel layer further includes a GPU management module, configured to perform the frequency scaling method provided in embodiments of this application, to implement frequency scaling and control on the GPU.

The hardware layer includes components such as the display and the GPU. The display may be used for image display, and the GPU may be used for image rendering and composition.

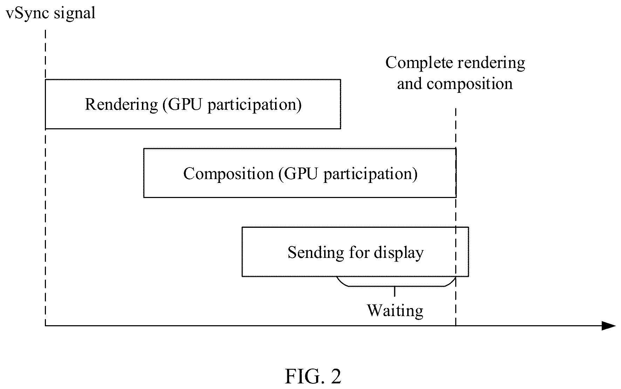

To facilitate understanding of a function of the GPU in a processing process of a frame of image, in embodiments of this application, based on FIG. 1, a process of image drawing and sending for display in the electronic device is further described by using an example with reference to FIG. 2.

Referring to FIG. 2, a processing process of a frame of image mainly includes step 1: rendering; step 2: composition; and step 3: sending for display.

### Step 1: rendering.

After receiving a vSync signal from an SF, an application may start drawing a new frame of image. Specifically, the application submits a drawing instruction to a render thread (RenderThread).

After receiving the drawing instruction, the RenderThread processes the drawing instruction and then sends the processed drawing instruction to a GPU. After receiving the processed drawing instruction, the GPU may perform rendering processing. That is, in a processing process of a frame of image, the GPU may be used for image rendering.

### Step 2: composition.

The RenderThread may further send, to the SF, image content obtained after the drawing instruction is processed, for example, a drawn image. After receiving the image content, the SF determines whether the image content needs to be composed and sent for display in the current frame, and processes content that needs to be composed and sent for display, for example, completes processing following a refresh rate. In addition, content that does not need to be composed and sent for display is placed in a waiting queue, and whether the content needs to be composed and sent for display is determined again in a next frame.

Generally, the HWC can complete only some simple composition work, and complex composition work needs to be completed by the GPU. Therefore, the SF may determine whether image composition in the current frame needs to be supported by the GPU. If image composition in the current frame needs to be supported by the GPU, the SF may invoke an interface of a graphics library to complete, by using the GPU, composition work that cannot be completed by the HWC. That is, in a processing process of a frame of image, the GPU may be further used for image composition.

It should be noted that in a process of performing step 2, the GPU may not complete image rendering. Therefore, the GPU needs to complete image composition after completing image rendering.

### Step 3: sending for display.

After completing image composition, the HWC may send a composition result to a display driver. Based on the composition result, the display driver further combines a processing result of the GPU, that is, a processing result of performing image rendering and image composition by the GPU, to obtain a to-be-displayed image and send the to-be-displayed image to the display.

It should be noted that when the HWC completes image composition, the GPU may not complete image rendering and image composition. Therefore, after receiving the composition result of the HWC, the display driver further needs to wait for the GPU to complete image rendering and image composition, so as to obtain the to-be-displayed image and send the to-be-displayed image to the display.

It can be learned that in a processing process of a frame of image, the GPU needs to complete image rendering and image composition. In addition, if completion of the GPU is not timely, the display driver cannot obtain the to-be-displayed image in a timely manner and send the to-be-displayed image to the display for display, thereby causing a frame loss.

In addition, a higher frequency of the GPU indicates stronger computing power provided and higher efficiency of image processing (including image rendering and image composition). Therefore, the electronic device may adjust and control the frequency of the GPU, so that the GPU provides computing power that matches a current image processing task, so as to meet a requirement for operating efficiency (for example, a frame rate and a refresh rate).

Generally, a developer of the GPU provides a set of original frequency scaling solutions for use by an electronic device configured with the GPU. In an example in which the developer is Qualcomm^{™}, Qualcomm^{™} provides an original frequency scaling solution-dynamic clock and voltage scaling (Dynamic Clock and Voltage Scaling, DCVS). The electronic device uses the DCVS, and may adjust a frequency level of the GPU to a corresponding frequency level based on usage of the GPU within a period of time. The usage of the GPU may be understood as a proportion of operating duration of the GPU within a period of time in total duration of the period of time.

It should be noted herein that the frequency of the GPU is usually represented by a frequency level. Generally, a larger number of the frequency level indicates a lower frequency of the GPU, and a smaller number of the frequency level indicates a higher frequency of the GPU. For example, there are a total of eight frequency levels 0-7, and the frequency of the GPU gradually decreases from the level 0 to the level 7. For example, a frequency corresponding to the level 0 is 680 MHz, a frequency corresponding to the level 6 is 295 MHz, and a frequency corresponding to the level 7 is 220 MHz.

An implementation of adjusting the frequency level of the GPU by using the DCVS is as follows: After the usage of the GPU is continuously above 90% for a specific period of time, the electronic device determines that the GPU running at a current frequency level is insufficient to efficiently complete a task, and therefore, the electronic device increases the frequency level of the GPU. After the frequency level of the GPU is increased, the GPU provides stronger computing power. Therefore, the GPU can complete a task in shorter time, and the usage of the GPU is correspondingly reduced. Certainly, if the usage of the GPU still cannot be reduced to be less than 90%, the electronic device further continues to increase the frequency level of the GPU until an appropriate frequency level at which the usage of the GPU can be kept stable to be less than 90%.

The electronic device uses the DCVS, and may adjust the frequency level of the GPU, to control the usage of the GPU to remain below 90%. However, if the electronic device uses the DCVS, the following problems may occur.

Problem 1: A frame loss occurs.

The electronic device uses the DCVS, and only after the usage of the GPU is continuously above 90% for a specific period of time, the frequency level of the GPU is increased. That is, adjustment of the frequency level is delayed.

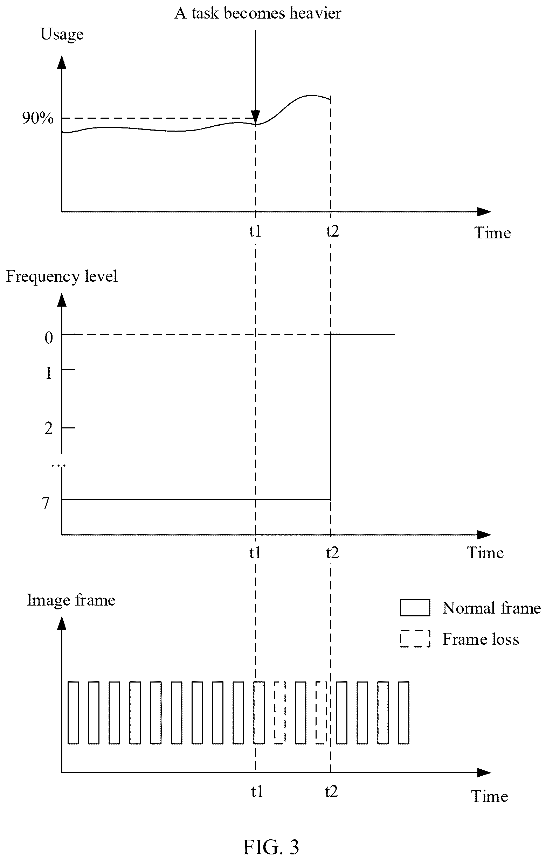

Referring to FIG. 3, before a moment t1, the frequency level of the GPU is controlled to be the level 7, and the usage of the GPU may be maintained within a range less than 90% but close to 90%. At the moment t1, load (that is, an image processing task, for example, tasks such as rendering and composition) of the GPU suddenly increases, and the usage of the GPU increases accordingly, for example, exceeds 90%. However, because the condition that the usage of the GPU is continuously above 90% for a specific period of time is not met within short time, the electronic device does not increase the frequency level of the GPU. That is, the GPU still operates at the level 7 within short time (for example, between the moment t1-a moment t2). In this period of time, the GPU may fail to efficiently complete a task due to a low frequency, resulting in a frame loss. As shown in FIG. 3, two frames are lost between the moment t1-the moment t2. After a period of time, for example, at the moment t2, the electronic device detects that the usage of the GPU is continuously above 90% for a specific period of time. In this case, the frequency level is increased, for example, increased from the level 7 to the level 0. Then, the GPU can complete processing of each frame of image in a timely manner, and no frame loss occurs. However, due to a delay in adjusting the frequency level, the frame loss between the moment t1-the moment t2 cannot be recovered.

Problem 2: After a frame is lost, the frequency level may still not be increased, thereby further causing a continuous frame loss.

The usage of the GPU is calculated in terms of a period of time. If the GPU has shorter operating time in a period of time, the usage is lower. If the GPU has longer operating time, the usage is higher. However, usage in a historical time period cannot accurately represent a real-time status of an image processing task. Therefore, control on the frequency by the electronic device may be inaccurate, and a continuous frame loss occurs.

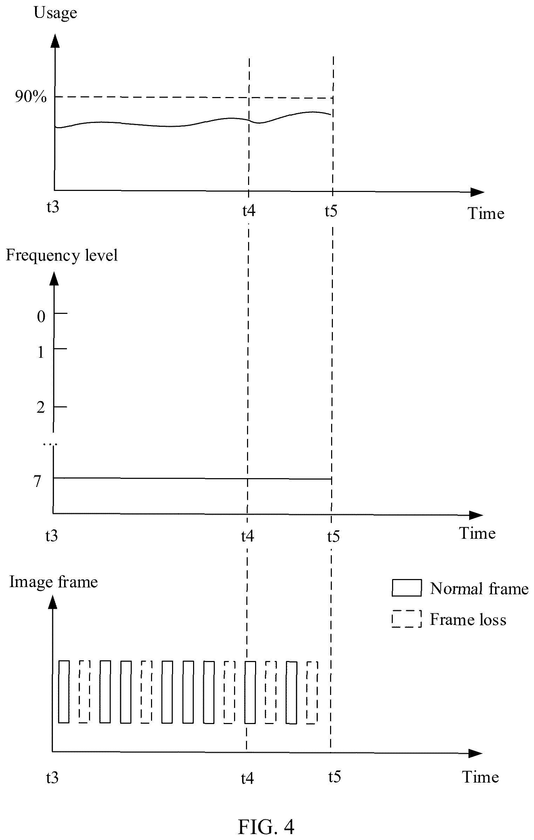

Referring to FIG. 4, between a moment t3-a moment t4, the frequency level of the GPU is controlled to be the level 7, and the usage of the GPU may be maintained below 90%. However, a frame loss exists, for example, three frames are lost in total. Subsequently, at the moment t4, the electronic device calculates the usage of the GPU between the moment t3-the moment t4. Because a frame loss occurs between the moment t3-the moment t4, the usage obtained through calculation is not high, for example, is still maintained below 90%. In this case, the electronic device does not increase the frequency level of the GPU. That is, the GPU still operates at the level 7, for example, operates at the level 7 between the moment t4-a moment t5. Consequently, a frame loss continues to occur, for example, two frames are lost in total.

Problem 3: Performance of the electronic device is likely to be unstable.

The electronic device uses the DCVS, and only when the usage of the GPU is above 90%, the frequency level is increased. In practice, the usage may be usually close to 90% but not exceed 90% (which may be briefly referred to as a dangerous level). When the usage is at the dangerous level, due to impact of the entire device, for example, impact of a battery level, a temperature, and the like of the electronic device, operation of the GPU is highly prone to fluctuation, thereby causing unstable performance of the electronic device. For example, a frame loss occurs from time to time.

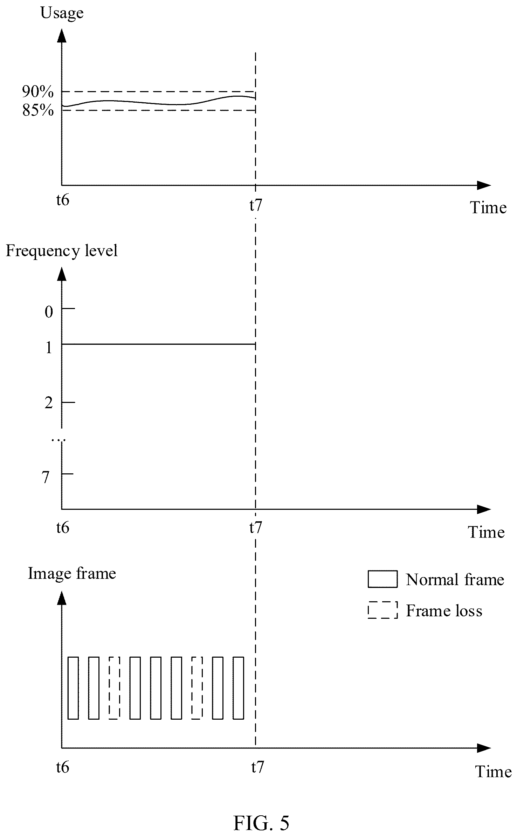

Referring to FIG. 5, between a moment t6-a moment t7, the usage of the GPU always fluctuates between 85% and 90%. Because the usage is not continuously above 90% for a specific period of time, the electronic device does not adjust the frequency level of the GPU, and the GPU always operates at a same frequency level, for example, the level 7. However, between the moment t6 and the moment t7, a frame loss occurs from time to time. For example, in FIG. 5, two frames are lost.

In addition to the foregoing DCVS solution, the developer of the GPU further provides a customized performance lock (Perflock) solution for the developer of the electronic device, so that the developer of the electronic device can more flexibly adjust the frequency level of the GPU, to overcome the foregoing problems in the DCVS to some extent. A main idea of Perflock is as follows: The electronic device may add a stub point to a problem scenario in which frequency scaling is needed, then identify the problem scenario by using the stub point, and adjust the frequency level of the GPU for the problem scenario by using an interface provided by the developer of the GPU.

However, Perflock is mainly applicable to some problem scenarios in which frequency scaling is necessary (which may also be referred to as mandatory scenarios). For some non-mandatory scenarios, that is, problem scenarios in which frequency scaling may be needed in some cases but frequency scaling may not be needed in some other cases, a resource waste may be caused if the electronic device uses Perflock.

A typical scenario is as follows: When a screen refresh rate or an application frame rate of the electronic device is high, the GPU usually needs to complete an image processing task of more frames of images in unit time. Therefore, a requirement for computing power of the GPU is high, and the GPU needs to operate at a high frequency level. Therefore, the electronic device may use Perflock to pile a stub point for a scenario in which a screen refresh rate is high (for example, reaches 120 hertz (Hz)), that is, mark that the frequency level of the GPU needs to be increased when the screen refresh rate reaches 120 Hz. Subsequently, in a process in which the GPU performs image processing, if the electronic device detects that the screen refresh rate reaches 120 Hz, the frequency level of the GPU may be increased.

However, in actual application, if the screen refresh rate of the electronic device reaches 120 Hz, the frequency level of the GPU does not necessarily need to be increased. For example, although the screen refresh rate of the electronic device reaches 120 Hz, there are not a large quantity of image processing tasks that need to be completed by the GPU. For example, the GPU does not need to complete complex composition processing. Therefore, even if the frequency level of the GPU is not increased, the GPU may complete a current image processing task in a timely manner, that is, a non-mandatory scenario. In this scenario, if Perflock is still used, the frequency level of the GPU is increased when the screen refresh rate reaches 120 Hz, which may lead to a waste of resources.

Based on the foregoing problems in DCVS and Perflock, embodiments of this application provide a frequency scaling method, which may be used for GPU frequency scaling.

In embodiments of this application, in a processing process of a frame of image, an electronic device (for example, a GPU management module in a kernel layer) may detect whether end time (which may also be referred to as first end time) at which a GPU completes image processing (including rendering and composition) exceeds preset time T0 (which may also be referred to as first time). If the end time exceeds the preset time T0, it indicates that the GPU cannot complete processing on a current frame of image in a timely manner, and the electronic device may increase a frequency level of the GPU, to ensure that the GPU completes processing on the current frame of image in a timely manner, thereby avoiding a frame loss.

In this way, the electronic device may increase a frequency of the GPU based on a case that the GPU cannot complete image processing in a timely manner in the current frame. In one aspect, the electronic device enables the GPU to obtain the current frame of image through processing in a timely manner, to ensure that a frame loss does not occur. In another aspect, the electronic device does not increase the frequency of the GPU in a case that the GPU can complete image processing in a timely manner, so that a resource waste is not caused.

In some embodiments, the preset time T0 may be a time point from which duration to a next refresh moment of a display is fixed duration 1. It may be understood that each time the display is refreshed, a new frame of image needs to be displayed. Therefore, the GPU needs to complete processing on the current frame of image before a next refresh, and the preset time T0 also needs to be before the next refresh moment. In this way, the electronic device may quickly determine the preset time T0 based on the next refresh moment and the fixed duration 1.

In some other embodiments, considering that the electronic device may have different processing progresses for different frames of images, the preset time T0 may alternatively be a time point that matches a processing progress of the current frame of image.

Specifically, the preset time T0 is a time point in a time length (denoted as duration L) from a moment T1 (which may also be referred to as second time) at which a display driver starts waiting for the GPU to complete image processing to a next refresh moment T2, where a proportion of a time length between the time point and the moment T1 in the duration L is a preset proportion λ1 (such as 0.7 or 0.8, which may also be referred to as a first proportion). For content that the display driver waits for the GPU to complete image processing, refer to the foregoing descriptions of step 3 in FIG. 2. Details are not described herein again.

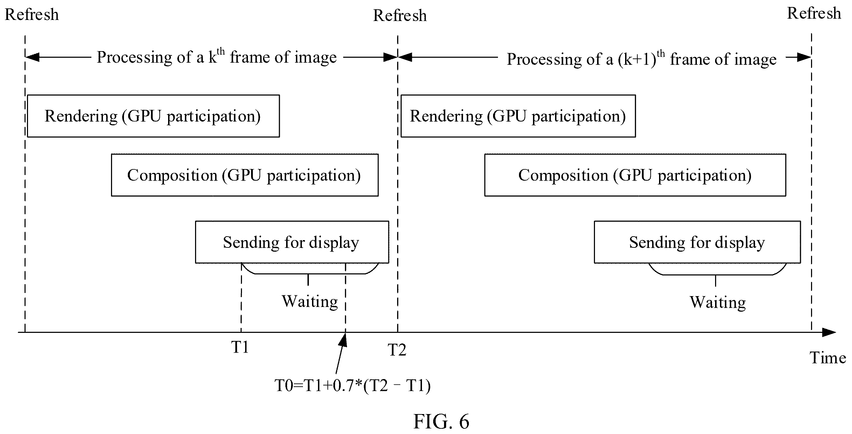

That the preset proportion λ1 is 0.7 is used as an example. In a processing process of a k^{th} frame of image shown in FIG. 6, the electronic device may determine that the preset time T0 is moment T1+0.7*(T2-T1).

It can be learned that, in this embodiment, the electronic device may determine the matched preset time T0 for the processing progress of the current frame of image, so that the frequency level of the GPU can be adjusted in a targeted manner. The following mainly describes the solutions of this application by using this embodiment.

In addition, it should be emphasized that when the display driver starts waiting for the GPU to complete image processing, it indicates that a CPU basically completes related processing of sending an image for display. Then, whether a frame loss occurs mainly depends on operating efficiency of the GPU. Therefore, preset time T0 is configured to be time after the display driver starts waiting for the GPU to complete image processing, and under the impact of only the operating frequency of the GPU, the frequency of the GPU may be adjusted, to accurately control that a frame loss does not occur.

The following separately describes specific implementations of determining the moment T1 and the next refresh moment T2.

First, the moment T1 is determined.

In practice, the display driver may wait, by using a waiting function (such as plane_wait_input_fence), for the GPU to complete image processing. It may be understood that, after the GPU completes image processing, a corresponding fence (fence) is released. Correspondingly, after the display driver finds, by using the waiting function, that the fence is released, it may be determined that the GPU completes image processing. In this case, the display driver may execute a subsequent send-for-display procedure, to drive the display to display the current frame of image. Based on this, the electronic device may determine that the moment T1 is a moment at which the display driver starts executing the waiting function.

Second, the next refresh moment T2 is determined.

In a process in which the display displays a (k-1)^{th} frame of image (which may also be referred to as a first image), the electronic device needs to complete processing on the k^{th} frame of image (which may also be referred to as a second image), such as rendering, composition, and sending for display. In this way, at the next refresh moment, the display can refresh and display the k^{th} frame of image. Therefore, the electronic device needs to complete image processing one frame in advance.

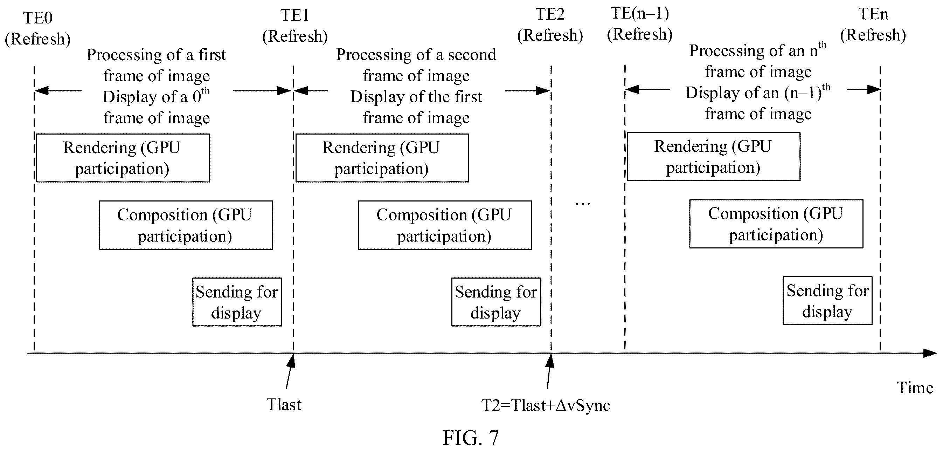

The display driver may complete image processing one frame in advance based on a hardware interrupt (TE, which may be understood as a refresh cycle) of the display. As shown in FIG. 7, between TE0 and TE1, the display displays a 0^{th} frame of image, and the display driver processes a first frame of image. Between TE1 and TE2, the display displays the first frame of image, and the display driver processes a second frame of image.... Between TE(n-1) and TEn, the display displays an (n-1)^{th} frame of image, and the display driver processes an n^{th} frame of image. A time range for displaying one frame on the display may be referred to as a first time range.

In some embodiments, the electronic device may approximately use a moment at which the display driver completes processing on a previous frame of image as a start moment (which may also be referred to as fifth time) of a current TE cycle. Using an example in which the current TE cycle is TE1 to TE2 shown in FIG. 7, a moment at which the display driver completes processing on the first frame of image is Tlast. In this case, the electronic device may determine Tlast as a start moment from TE1 to TE2, that is, TE1.

It may be understood that, if a frame loss occurs in the first frame of image, only a response is not timely, which may also be understood as that touch and follow performance is not high, and use by a user is not affected excessively. Therefore, the electronic device may adjust the frequency of the GPU by using the solution in this application for the second frame of image and subsequent images. In this case, a moment at which the display driver completes processing on the first frame of image is first Tlast. For example, TE1 in FIG. 7 is first Tlast.

Actually, after completing processing on a frame of image, the display driver may indicate, by using an end function (such as sde_kms_complete_commit), that processing on the frame of image is completed. Based on this, the electronic device may use a moment at which the display driver executes the end function as a start moment of a current TE cycle.

It may be understood that, after each refresh is completed, the display sends a vSync signal once, to trigger processing on a next frame of image. That is, a refresh cycle is a time interval between two vSync signals, and may be denoted as △vSync (which may also be referred to as a refresh cycle). For example, if the refresh rate is 120 Hz, △vSync=8.3333 ms; if the refresh rate is 90 Hz, △vSync=11.1111 ms; or if the refresh rate is 60 Hz, △vSync=16.6666 ms. In this case, the electronic device may obtain an end moment (which may also be referred to as sixth time) of the current TE cycle, that is, a next refresh moment T2, by adding △vSync to a moment at which the display driver completes processing on the previous frame of image. Still using an example in which the current TE cycle is TE1 to TE2 shown in FIG. 7, a moment at which the display driver completes processing on the first frame of image is Tlast. In this case, the electronic device may determine the next refresh moment T2=Tlast+△vSync.

Certainly, the electronic device may also record a latest refresh moment, and add △vSync to the latest refresh moment to obtain the next refresh moment T2.

After determining the moment T1 and the next refresh moment T2, the electronic device may determine the preset time T0 based on the moment T1 and the next refresh moment T2. Subsequently, the electronic device may detect whether the end time at which the GPU completes image processing exceeds the preset time T0.

After the moment T1, if the display driver still executes the waiting function, it indicates that the display driver still waits for the GPU to complete image processing. That is, the GPU has not completed image processing. On the contrary, if the display driver has ended executing the waiting function, it indicates that the display driver has learned that the GPU completes image processing. That is, the GPU has completed image processing. Based on this, after the moment T1, the electronic device may detect, by detecting whether the display driver still executes the waiting function, whether the GPU completes image processing.

In a specific implementation, the electronic device may detect, after the preset time T0 is reached, whether the display driver is executing the waiting function. If the display driver still executes the waiting function at the preset time T0, the electronic device may determine that the end time at which the GPU completes image processing exceeds the preset time T0. If the display driver ends executing the waiting function at the preset time T0, the electronic device may determine that the end time at which the GPU completes image processing does not exceed the preset time T0.

Actually, after detecting that the display driver starts executing the waiting function, the electronic device calculates a time difference between the preset time T0 and a current moment (for example, the moment T1), and sets a timer whose timing duration is the time difference. Subsequently, the electronic device may detect, at the end of timing of the timer, whether the display driver is executing the waiting function. The end of timing is the preset time. Therefore, the electronic device detects, at the end of timing, whether the display driver is executing the waiting function, to detect, after the preset time T0 arrives, whether the display driver is executing the waiting function.

After determining that the end time at which the GPU completes image processing exceeds the preset time T0, the electronic device may increase the frequency level of the GPU. For example, the electronic device may increase the frequency level of the GPU to a highest level, to ensure that the GPU can complete image processing on the current frame before the next refresh moment T2, thereby ensuring that the current frame is not lost. Certainly, the electronic device may alternatively increase the frequency level of the GPU by a preset quantity of levels, for example, three frequency levels. This is not specifically limited in this embodiment of this application. In the following, increasing to the highest level is mainly used as an example for description.

Increasing the frequency level of the GPU includes: increasing a minimum value of the frequency (which may also be referred to as a minimum frequency) or increasing an actual value of the frequency (which may also be referred to as an actual operating frequency). It may be understood that the actual value of the frequency of the GPU needs to be greater than or equal to the minimum value, that is, the GPU needs to operate at or above the minimum value of the frequency.

After the minimum value is increased, the actual value of the frequency of the GPU also changes to an increased minimum value, so that it can be ensured that the actual value is greater than or equal to the minimum value. Then, the GPU may operate at a frequency level corresponding to the increased minimum value.

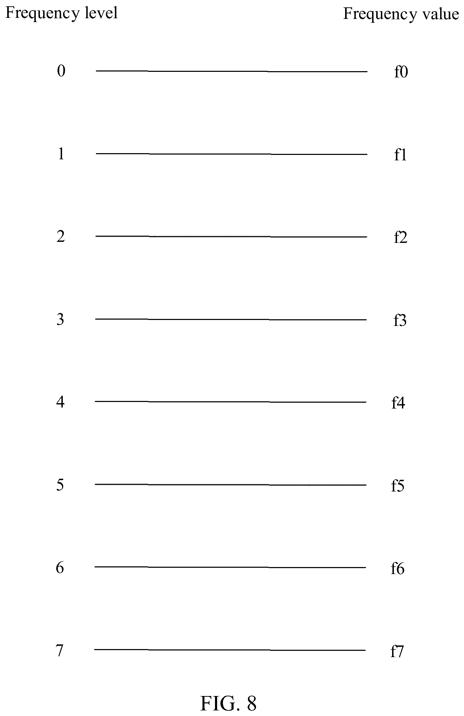

A correspondence between a frequency level and a frequency value shown in FIG. 8 is used as an example. If the minimum value of the frequency is f7 before increasing, the actual value is also f7, that is, both the minimum value and the actual value are at the level 7. The electronic device increases the minimum value to f0, that is, increases the minimum value to the level 0. Accordingly, the actual value of the frequency of the GPU is also increased to f7, that is, the actual value is also increased to the level 0.

After the actual value is increased, because the minimum value of the frequency of the GPU does not change, after the actual value of the frequency of the GPU is increased, the electronic device may control the frequency of the GPU through DCVS. That is, the actual value of the frequency of the GPU may not be kept stable after an increase.

The correspondence between a frequency level and a frequency value shown in FIG. 8 is still used as an example. If the minimum value of the frequency is f7 before increasing, the actual value is also f7, that is, both the minimum value and the actual value are at the level 7. The electronic device increases the actual value to f0, that is, increases the actual value to the level 0. However, because the minimum value is still corresponding to the level 7, and the usage of the GPU gradually decreases, the electronic device may gradually decrease the actual value to f1, f2, ..., and f7 through DCVS. It should be noted that when using DCVS, the electronic device also controls a change of the actual value by adjusting the minimum value.

The following separately describes manners of increasing the minimum value and increasing the actual value.

### Manner 1: Increase the minimum value.

After the minimum value of the frequency of the GPU is increased, the GPU may operate for a long time at a frequency level corresponding to an increased minimum value, for example, operate for a long time at the level 0. However, long-term operation of the GPU at a high frequency level may lead to a waste of resources. Based on this, after the minimum value is increased, in a processing process of a subsequent frame of image, when detecting that the GPU can efficiently complete image processing, the electronic device may further decrease the frequency level of the GPU, thereby avoiding a waste of resources.

Similarly, decreasing the frequency level of the GPU includes: decreasing the minimum value.

After the minimum value is decreased, the actual value of the frequency of the GPU also changes to a decreased minimum value, and then the GPU may operate at a frequency level corresponding to the decreased minimum value. The correspondence between a frequency level and a frequency value shown in FIG. 8 is used as an example. If the minimum value of the frequency is f0 before decreasing, the actual value is also f0, that is, both the minimum value and the actual value are at the level 7. The electronic device decreases the minimum value to f1, that is, increases the minimum value to the level 1. Subsequently, the actual value of the frequency of the GPU is also decreased to f1, that is, the actual value is also decreased to the level 1.

However, decreasing the frequency level of the GPU usually does not include decreasing the actual value. A reason is as follows: When the actual value is consistent with the minimum value, if the actual value is decreased, the actual value is less than the minimum value. This does not meet the requirement that the actual value of the frequency of the GPU should be greater than or equal to the minimum value.

In some embodiments, after the minimum value of the frequency of the GPU is increased, the electronic device may detect, in a processing process of a subsequent image, whether end time at which the GPU completes image processing exceeds preset time T3 (which may also be referred to as third time). If the end time does not exceed the preset time T3, it indicates that the GPU can efficiently complete image processing, the electronic device may decrease the minimum value, and the actual value of the frequency of the GPU also gradually decreases to the minimum value subsequently, so that resources can be saved when the GPU can efficiently complete image processing.

Similar to the preset time T0, the preset time T3 may be a time point from which duration to the next refresh moment T2 is fixed duration 2. The fixed duration 2 is greater than the fixed duration 1. In this way, the electronic device may also quickly determine the preset time T3 based on the next refresh moment T2 and the fixed duration 2.

Alternatively, the preset time T3 may be a time point in the duration L, where a proportion of a time length between the time point and the moment T1 to the duration L is a preset proportion λ2 (for example, 0.5 or 0.6). The preset proportion λ2 is less than the preset proportion λ1.

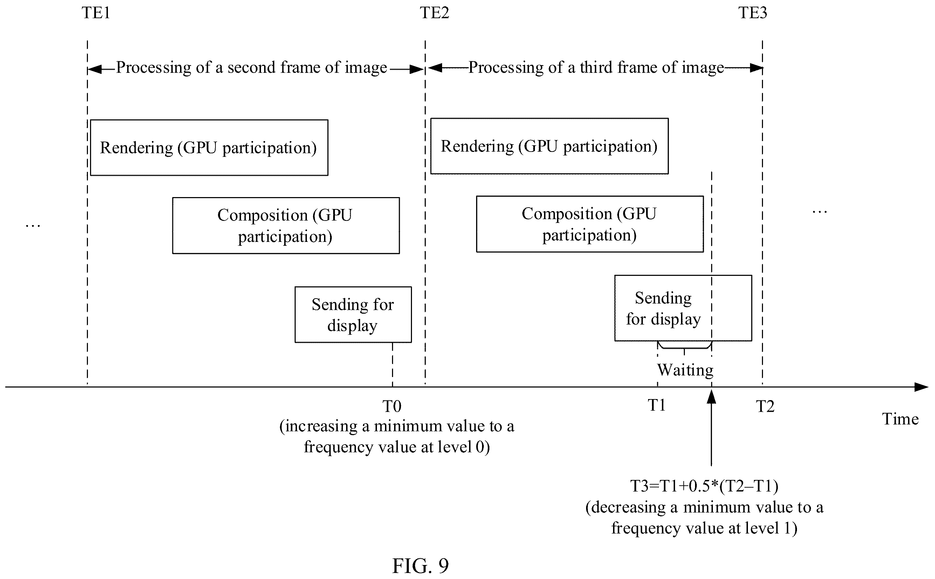

That the preset proportion λ2 is 0.5 is used as an example. In a process of processing a second frame of image shown in FIG. 9 (for example, at the preset time T0), the electronic device increases the minimum value of the frequency of the GPU to a frequency value at the level 0. Subsequently, in a process of processing a third frame of image, the electronic device may determine that the preset time T3 is moment T1+0.5*(T2-T1).

For determining the moment T1 and the next refresh moment T2, refer to the foregoing related descriptions of determining the preset time T0. Details are not described herein again.

Similarly, after the moment T1, the electronic device may detect, by detecting whether the display driver is executing the waiting function, whether the GPU completes image processing. In a specific implementation, the electronic device may detect, after the preset time T3 is reached, whether the display driver is executing the waiting function. If the display driver still executes the waiting function at the preset time T3, the electronic device may determine that the end time at which the GPU completes image processing exceeds the preset time T3. If the display driver ends executing the waiting function at the preset time T3, the electronic device may determine that the end time at which the GPU completes image processing does not exceed the preset time T3.

Still referring to FIG. 9, at the preset time T3, the display driver has ended executing the waiting function, and the electronic device may determine that end time at which the GPU completes image processing does not exceed the preset time T3.

When the end time at which the GPU completes image processing does not exceed the preset time T3, the electronic device may decrease the minimum value of the frequency of the GPU to a frequency value at a frequency level that is one level lower than a current frequency level. Still using the process of processing the third frame of image shown in FIG. 9 as an example, the end time at which the GPU completes image processing does not exceed the preset time T3, and the electronic device may decrease the minimum value of the frequency of the GPU to a frequency value at the level 1. Alternatively, the electronic device may decrease the minimum value to a frequency value at a frequency level that is a preset quantity (such as 2 or 3) of levels lower than a current frequency level. In the following, an example in which the minimum value is decreased to a frequency value at the frequency level that is one level lower than the current frequency level is mainly used for description.

After the minimum value of the frequency of the GPU is decreased, the GPU may operate for a long time at a frequency level corresponding to a decreased minimum value, for example, operate for a long time at the level 1. In a processing process of a subsequent frame of image, the electronic device may continue to detect whether the frequency level is appropriate and adjust the minimum value when detecting that the frequency level is inappropriate. That the frequency level is inappropriate includes that the end time at which the GPU completes image processing does not exceed the preset time T3 (which causes a resource waste) or the end time at which the GPU completes image processing exceeds the preset time T0 (which causes a frame loss).

It can be learned that, in manner 1, in a processing process of each frame of image, the electronic device may detect whether end time at which the GPU completes image processing exceeds the preset time T3. If the end time does not exceed the preset time T3, the minimum value of the frequency of the GPU is decreased, for example, decreased to a frequency value at a frequency level that is one level lower. In addition, the electronic device may detect whether the end time at which the GPU completes image processing exceeds the preset time T0. If the end time exceeds the preset time T0, the minimum value of the frequency of the GPU is increased, for example, increased to a frequency value at a highest level.

In addition, because the preset proportion λ1 is greater than the preset proportion λ2, it indicates that in a processing process of a frame of image, the preset time T0 is closer to the next refresh moment T2, and the preset time T3 is closer to the moment T1. That is, a sequence from the beginning to the end is: the moment T1, the preset time T3, the preset time T0, and the next refresh moment T2. In this case, in a processing process of a frame of image, when detecting that the end time at which the GPU completes image processing does not exceed the preset time T3, the electronic device may omit a step of detecting whether the end time at which the GPU completes image processing exceeds the preset time T0, thereby avoiding ineffective detection and saving operation resources.

As such, it should be noted that, after the electronic device decreases the minimum value of the frequency of the GPU, even if the actual value of the frequency of the GPU slowly decreases to the minimum value, the actual value is greater than or equal to the minimum value. In addition, a slow decrease may also ensure that the actual value of the frequency of the GPU does not suddenly change significantly. Therefore, after the minimum value of the frequency of the GPU is decreased, the actual value is decreased to be equal to the minimum value after a delay of a period of time. That is, only after a delay of a period of time, the GPU actually operates at a decreased minimum value, that is, takes effect, for example, takes effect after a delay of 100 ms.

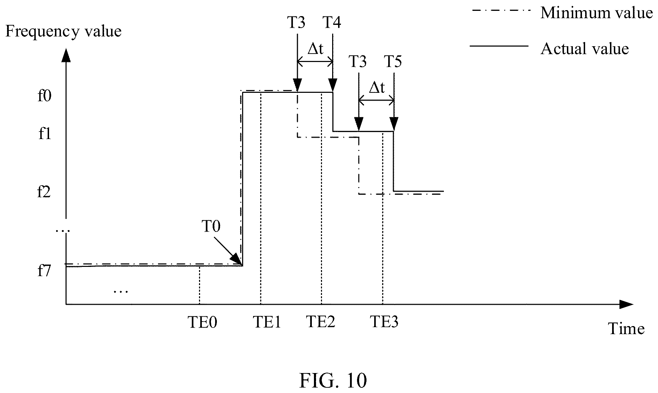

Referring to FIG. 10, before TE0, the actual value and the minimum value of the frequency of the GPU are both the frequency value f7 at the level 7. End time at which the GPU completes image processing between TE0-TE1 exceeds preset time T0 between TE0-TE1, and the electronic device increases the minimum value of the frequency of the GPU to the frequency value f0 at the level 0. In this case, the actual value of the frequency value of the GPU also increases to the frequency value f0 rapidly (for example, at the preset time T0). Subsequently, at preset time T3 between TE1-TE2, the electronic device decreases the minimum value of the frequency of the GPU to the frequency value f1 at the level 1, but the actual value of the frequency of the GPU decreases to the frequency value f1 at a moment T4. Subsequently, at preset time T3 between TE2-TE3, the electronic device further decreases the minimum value of the frequency of the GPU to the frequency value f2 at the level 2, but the actual value of the frequency of the GPU decreases to the frequency value f2 at a moment T5.

That is, within delay duration (which may also be referred to as a duration threshold), for example, in FIG. 10, between the preset time T3 and the moment T4 in TE1-TE2 and between the preset time T3 and the moment T5 in TE2-TE3, the actual value of the frequency of the GPU does not actually decrease to be consistent with the minimum value, but actually decreases to be consistent with the minimum value after the delay duration.

In the example in FIG. 10, the delay duration is relatively short. In a process of processing a current frame of image, the electronic device decreases the minimum value of the frequency of the GPU. In the first half of a process of processing a next frame of image, the actual value of the frequency of the GPU is decreased to be consistent with the minimum value. For example, at the preset time T3 between TE1-TE2 in FIG. 10, the electronic device decreases the minimum value to the frequency value f1, and subsequently, at the moment T4 in the first half of TE2-TE3, the actual value of the frequency of the GPU also decreases to the frequency value f1. In this case, at preset time T0 or preset time T3 in a process of processing each frame of image, the electronic device detects whether an effective actual value is appropriate.

In practice, the delay duration may be shorter or longer. If the delay duration is longer, preset time T0 or preset time T3 in a processing process of a next frame of image or more frames of images after the minimum value is decreased may be within the delay duration, that is, the actual value is not decreased to be consistent with the minimum value. In this case, at the preset time T0 or the preset time T3 within the delay duration, it cannot be detected whether the effective actual value is appropriate.

Based on this, in some embodiments, after the minimum value of the frequency of the GPU is decreased (also referred to as after fourth time), only after the delay duration expires, the electronic device detects whether a frequency level is appropriate. That is, within the delay duration, even if the preset time T0 or the preset time T3 arrives, whether the frequency level is appropriate is not detected, and the frequency level is not adjusted. In a specific implementation, after decreasing the minimum value of the frequency of the GPU, the electronic device may set a timer whose timing duration is the delay duration. Before timing of the timer ends, when the preset time T0 or the preset time T3 arrives, and the electronic device does not detect whether the frequency level is appropriate. After timing of the timer ends, only when the preset time T0 or the preset time T3 arrives, the electronic device detects whether the frequency level is appropriate. In this way, the electronic device can avoid detecting and adjusting the frequency level without effectiveness.

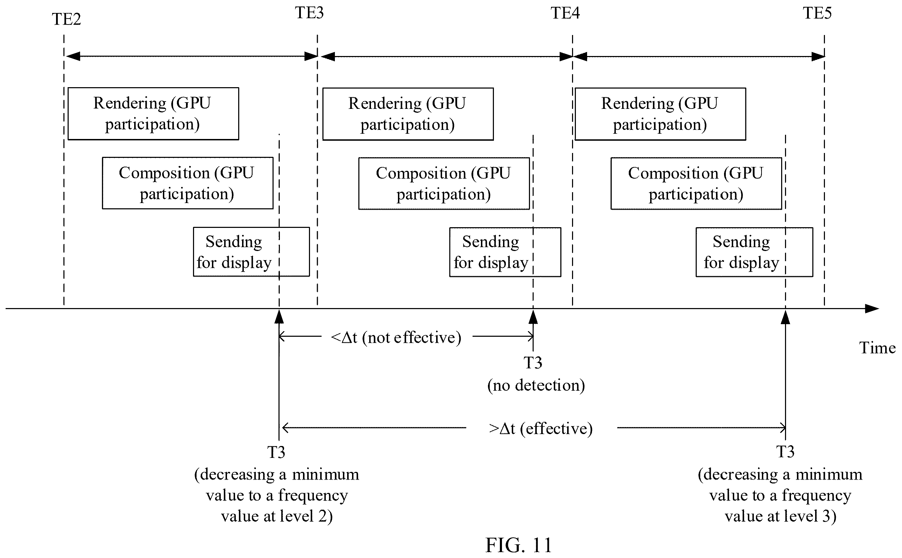

For example, at the preset time T3 between TE2-TE3 shown in FIG. 11, the minimum value of the frequency of the GPU of the electronic device is decreased to a frequency value at the level 2, but the actual value does not actually decrease to the frequency value at the level 2 within the delay duration (for example, denoted as <△t). For example, a time interval <△t between the preset time T3 between TE3-TE4 and the preset time T3 between TE2-TE3 shown in FIG. 11 indicates that the actual value of the frequency of the GPU is not decreased to the frequency value at the level 2 at the preset time T3 between TE3-TE4. Therefore, as shown in FIG. 11, between TE3-TE4, even if end time at which the GPU completes image processing does not exceed the preset time T3 between TE3-TE4, it does not indicate that image processing can be efficiently completed only when the actual value of the frequency of the GPU is the frequency value at the level 2. Therefore, the electronic device may not detect whether the end time at which the GPU completes image processing exceeds the preset time T3 between TE3-TE4, and does not further decrease the minimum value, thereby avoiding incorrect frequency level adjustment.

Still referring to FIG. 11, if a time interval between the preset time T3 between TE4-TE5 and the preset time T3 between TE2-TE3 shown in FIG. 11 exceeds the delay duration (for example, denoted as >△t), it indicates that the actual value of the frequency of the GPU has been decreased to the frequency value at the level 2 at the preset time T3 between TE4-TE5. Therefore, at the preset time T3 between TE4-TE5, the electronic device may detect whether end time at which the GPU completes image processing exceeds the preset time T3 between TE4-TE5. In addition, as shown in FIG. 11, if the end time at which the GPU completes image processing does not exceed the preset time T3 between TE4-TE5, the electronic device may continue to decrease the minimum value of the frequency of the GPU, for example, to the frequency value at the level 3.

In a processing process of any frame of image, if the electronic device detects that end time at which the GPU completes image processing exceeds the preset time T3 and does not exceed the preset time T0, it indicates that the GPU operating at a current frequency level can ensure timely completion of image processing, and can avoid a resource waste. That is, the current frequency level is appropriate. In this case, the electronic device neither needs to increase the minimum value, nor needs to decrease the minimum value.

Further, in a processing process of y (y≥1, and y is an integer and may also be referred to as a first quantity) consecutive frames of images, if the electronic device detects that all end time at which the GPU completes image processing exceeds the preset time T3 and does not exceed the preset time T0, it indicates that a current frequency level can maintain image processing efficiency of the GPU within a proper range. Subsequently, the electronic device may use DCVS to assist in adjusting the frequency of the GPU.

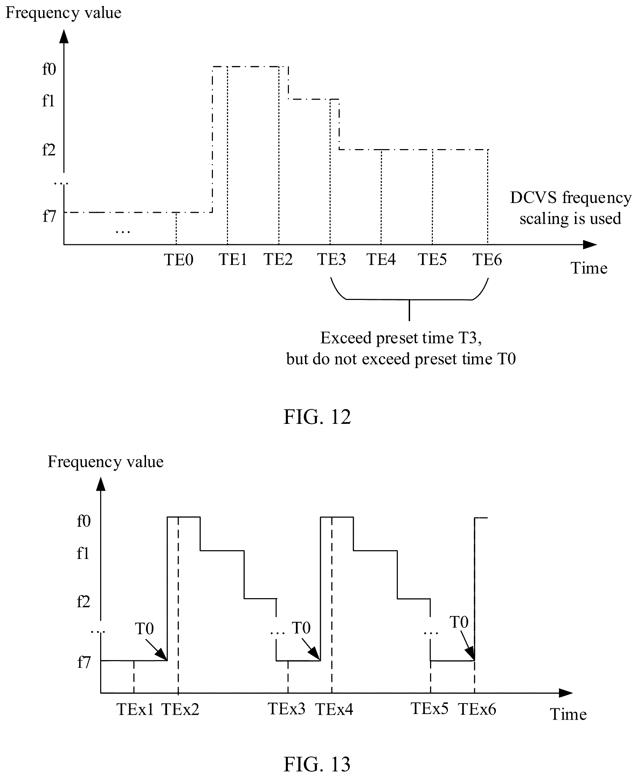

Using y=3 as an example, after the electronic device decreases the minimum value of the frequency of the GPU to the frequency value f2 shown in FIG. 12, in three consecutive TE cycles of TE3-TE4, TE4-TE5, and TE5-TE6, that is, in a processing process of three consecutive frames of images, the electronic device detects that end time at which the GPU completes image processing exceeds the preset time T3, and does not exceed the preset time T0. In this case, the electronic device may use DCVS to adjust the frequency after TE6.

Certainly, if subsequently detecting again that end time at which the GPU completes image processing exceeds the preset time T0, the electronic device may repeat manner 1 again until an appropriate frequency level is found.

### Manner 2: Increase the actual value.

Different from manner 1, after the actual value of the frequency of the GPU is increased, the actual value automatically changes, for example, decreases, under the control of DCVS, and it is unnecessary for the electronic device to further decrease the minimum value based on end time at which the GPU completes image processing, to decrease the actual value. Therefore, in manner 2, an increase in the actual value is mainly concerned.

In some embodiments, after detecting that end time at which the GPU completes image processing exceeds the preset time T0, the electronic device increases the actual value of the frequency of the GPU to the frequency value at the highest level, for example, the frequency value f0. Subsequently, the electronic device may control the actual value of the frequency of the GPU through DCVS. After detecting again that end time at which the GPU completes image processing exceeds the preset time T0, the electronic device may increase the actual value of the frequency of the GPU to the frequency value at the highest level again.

In this way, it can be ensured that the GPU completes image processing in a timely manner, to avoid a frame loss. In addition, it can be ensured that the frequency level of the GPU matches the usage.

For example, the electronic device separately detects, at preset time T0 between TEx1-TEx2, TEx3-TEx4, and TEx5-TEx6 shown in FIG. 13, that end time at which the GPU completes image processing exceeds the preset time T0 in the corresponding TE cycle. Therefore, the electronic device may separately increase the actual value of the frequency to the frequency value at the highest level, for example, f0, at the preset time T0 between TEx1-TEx2, TEx3-TEx4, and TEx5-TEx6. The electronic device may adjust the actual value of the frequency of the GPU through DCVS between every two times of increasing the actual value to the frequency value at the highest level. For example, as the usage of the GPU gradually decreases, the electronic device may gradually decrease the actual value through DCVS.

It should be noted that in the example shown in FIG. 13, the electronic device uses DCVS to gradually decrease the actual value from the frequency value f0 to the frequency value f7.

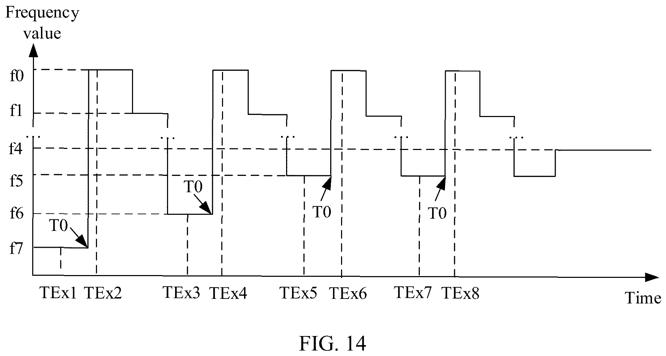

However, during actual implementation, the electronic device may perform adjustment based on an actual status of the usage, which is not limited to FIG. 13. Referring to FIG. 14, after the electronic device increases the actual value of the frequency to f0 at present time T0 between TEx1-TEx2, TEx3-TEx4, TEx5-TEx6, and TEx7-TEx8, the electronic device may respectively gradually decrease the actual value from the frequency value f0 to the frequency value f6, the frequency value f5, the frequency value f5, and the frequency value f5 through DCVS. That is, decreasing to the frequency value f7 is not performed each time.

Further, in this embodiment, if the actual value is increased to f0 z consecutive times (which may also be referred to as a preset quantity of times), the electronic device decreases the actual value from the frequency value f0 to a same frequency value (which may also be referred to as a first value) through DCVS, and the electronic device may increase the minimum value to a frequency value (which may also be referred to as a second value) that is one frequency level higher than the same frequency value, so that the GPU can operate at a frequency at which end time of completing image processing is earlier than the preset time T0.

Using z=3 as an example, as shown in FIG. 14, after the electronic device increases the actual value to f0 three consecutive times at the preset time T0 between TEx3-TEx4, TEx5-TEx6, and TEx7-TEx8, the electronic device uses DCVS to decrease the actual value from the frequency value f0 to the frequency value f5, that is, the frequency value f5 is the foregoing same frequency value. Therefore, the electronic device may increase the minimum value to a frequency value, such as f4, that is one frequency level higher than the frequency value f5.

An embodiment of this application further provides an electronic device. The electronic device may include a display, a memory, and one or more processors (such as a CPU, a GPU, and an NPU). The display, the memory, and a processor are coupled to each other. The memory is configured to store computer program code, and the computer program code includes computer instructions. When the processor executes the computer instructions, the electronic device may perform each function or step performed by the device in the foregoing method embodiments.

An embodiment of this application further provides a chip system. The chip system includes at least one processor and at least one interface circuit. The processor and the interface circuit may be interconnected by using a wire. For example, the interface circuit may be configured to receive a signal from another apparatus (for example, the memory of the electronic device). For another example, the interface circuit may be configured to send a signal to another apparatus (for example, the processor). For example, the interface circuit may read the instructions stored in the memory, and send the instructions to the processor. When the instructions are executed by the processor, the electronic device may perform steps in the foregoing embodiments. Certainly, the chip system may further include another discrete component. This is not specifically limited in this embodiment of this application.

An embodiment further provides a computer storage medium. The computer storage medium stores computer instructions. When the computer instructions are run on an electronic device, the electronic device is enabled to perform the foregoing related method steps to implement the image processing method in the foregoing embodiment.

An embodiment further provides a computer program product. When the computer program product runs on a computer, the computer is enabled to perform the foregoing related steps to implement the image processing method in the foregoing embodiment.

In addition, an embodiment of this application further provides an apparatus. The apparatus may be specifically a chip, a component, or a module. The apparatus may include a processor and a memory that are connected. The memory is configured to store computer executable instructions. When the apparatus runs, the processor may execute the computer executable instructions stored in the memory, so that the chip performs the image processing method in the foregoing method embodiments.

The electronic device, the computer storage medium, the computer program product, or the chip provided in the embodiment is configured to perform the corresponding method provided above. Therefore, for beneficial effects that can be achieved by the electronic device, the computer storage medium, the computer program product, or the chip, refer to beneficial effects in the corresponding method provided above. Details are not described herein again.

It may be clearly learned by a person skilled in the art from the foregoing description of the implementations that, for convenience and brevity of description, division into only the foregoing functional modules is used as an example for description. In actual application, the foregoing functions may be allocated to different functional modules for implementation according to a requirement, that is, an internal structure of an apparatus is divided into different functional modules, to complete all or some of the functions described above.

In the several embodiments provided in this application, it should be understood that the disclosed apparatus and method may be implemented in other manners. For example, the described apparatus embodiments are merely examples. For example, division into the modules or units is merely logical function division. In actual implementation, there may be another division manner. For example, a plurality of units or components may be combined or integrated into another apparatus, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may be one or more physical units, may be located in one place, or may be distributed in a plurality of different places. Some or all of the units may be selected according to an actual requirement to achieve the objectives of the solutions in the embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

Finally, it should be noted that the foregoing embodiments are merely used to describe the technical solutions of this application, but are not intended to limit this application. Although this application is described in detail with reference to example embodiments, a person of ordinary skill in the art should understand that modification or equivalent replacement may be performed on the technical solutions of this application without departing from the spirit and scope of the technical solutions of this application.

## Claims

1. A frequency scaling method, applied to an electronic device, wherein the electronic device comprises a graphics processing unit GPU, and the method comprises:
displaying, by the electronic device, a first image;
within a first time range for displaying the first image, detecting, by the electronic device, whether first end time at which the GPU completes processing on a second image exceeds first time, wherein the second image and the first image are two consecutive frames of images, and the first time is within the first time range; and increasing, by the electronic device, a frequency of the GPU if the first end time exceeds the first time; and
displaying, by the electronic device, the second image after the GPU completes the processing on the second image.

2. The method according to claim 1, wherein the electronic device further comprises a display driver and a hardware composer HWC, the first time is after second time at which the display driver starts waiting for the GPU to complete the processing on the second image, and after receiving a composition result of the HWC for the second image, the display driver starts waiting for the GPU to complete the processing on the second image.

3. The method according to claim 2, wherein the detecting, by the electronic device, whether first end time at which the GPU completes processing on a second image exceeds first time comprises:
detecting, by the electronic device at the first time, whether the display driver is waiting for the GPU to complete the processing on the second image, wherein
if the display driver is waiting for the GPU to complete the processing on the second image, the first end time exceeds the first time; or
if the display driver is not waiting for the GPU to complete the processing on the second image, the first end time does not exceed the first time.

4. The method according to claim 2 or 3, wherein the second time comprises time at which the display driver starts executing a waiting function; and
the waiting function is used by the display driver to wait for the GPU to complete the processing on the second image, and after the GPU completes the processing on the second image, the display driver ends executing the waiting function.

5. The method according to any one of claims 1-4, wherein the increasing, by the electronic device, a frequency of the GPU comprises:
increasing, by the electronic device, a minimum frequency of the GPU; and
the method further comprises:
within the first time range for displaying the first image, detecting, by the electronic device, whether the first end time exceeds third time, and decreasing, by the electronic device, the frequency of the GPU if the first end time does not exceed the third time, wherein
the third time is within the first time range, and the third time is before the first time.

6. The method according to claim 5, wherein the detecting, by the electronic device, whether first end time at which the GPU completes processing on a second image exceeds first time comprises:
if the first end time exceeds the third time, detecting, by the electronic device, whether the first end time at which the GPU completes the processing on the second image exceeds the first time.

7. The method according to claim 5 or 6, wherein the detecting, by the electronic device, whether first end time at which the GPU completes processing on a second image exceeds first time comprises:
if a time interval between the first time and fourth time is greater than a duration threshold, detecting, by the electronic device, whether the first end time exceeds the first time; and
the detecting, by the electronic device, whether the first end time exceeds third time comprises:
if the time interval between the third time and the fourth time is greater than the duration threshold, detecting, by the electronic device, whether the first end time exceeds the third time, wherein
the fourth time is time at which the electronic device decreases the frequency of the GPU last time before the first image is displayed.

8. The method according to any one of claims 5-7, wherein the electronic device does not adjust the frequency of the GPU if the first end time exceeds the third time but does not exceed the first time.

9. The method according to claim 8, wherein the method further comprises:
if first end time corresponding to at least a first quantity of consecutive images exceeds the third time but does not exceed the first time, adjusting, by the electronic device, the frequency of the GPU through dynamic clock and voltage scaling DCVS.

10. The method according to any one of claims 1-4, wherein the increasing, by the electronic device, a frequency of the GPU comprises:
increasing, by the electronic device, an actual operating frequency of the GPU; and
after the increasing, by the electronic device, a frequency of the GPU, the method further comprises:
adjusting, by the electronic device, the frequency of the GPU through dynamic clock and voltage scaling DCVS.

11. The method according to claim 10, wherein the method further comprises:
if the frequency of the GPU is continuously increased more than a preset quantity of times, decreasing, by the electronic device, the frequency of the GPU to a first value through the DCVS, and increasing, by the electronic device, a minimum frequency of the GPU to a second value, wherein a frequency level to which the second value belongs is one level higher than a frequency level to which the first value belongs.

12. The method according to any one of claims 2-4, wherein the electronic device further comprises a display;
the displaying, by the electronic device, a first image comprises:
at fifth time after the GPU completes the processing on the first image, driving, by the display driver, the display to display the first image; and
the method further comprises:
obtaining, by the electronic device, the fifth time and the second time;
adding, by the electronic device, a refresh cycle of the display to the fifth time to obtain sixth time; and
determining, by the electronic device, a time point between the second time and the sixth time as the first time point, wherein a proportion of a time interval between the time point and the second time in a time interval between the second time and the sixth time is a first proportion.

13. An electronic device, comprising a display, one or more processors, and one or more memories, wherein the one or more processors are coupled to the display and the one or more memories, the one or more memories are configured to store computer program code, the computer program code comprises computer instructions, and when the one or more processors execute the computer instructions, the electronic device is enabled to perform the method according to any one of claims 1-12.

14. A computer-readable storage medium, comprising instructions, wherein when the instructions are run on an electronic device, the electronic device is enabled to perform the method according to any one of claims 1-12.
